# EUROPÄISCHE PATENTSCHRIFT

(11) **EP 2 456 157 B1**
(45) Veröffentlichungstag und Bekanntmachung des Hinweises auf die Patenterteilung: **05.06.2013**
(21) Anmeldenummer: 10014689.3
(22) Anmeldetag: 17.11.2010
(51) Int. Cl.: H04L 29/06, H04W 12/06

(54) **Schutz der Privatsphäre bei der Anmeldung eines Nutzers an einem gesicherten Webdienst mittels eines Mobilfunkgerätes**
Protecting privacy when a user logs into a secure web service using a mobile device
Protection de la sphère privée lors de l'inscription d'un utilisateur à un service Web sécurisé à l'aide d'un téléphone mobile

(43) Veröffentlichungstag der Anmeldung: 23.05.2012
(73) Patentinhaber: Deutsche Telekom AG, 53113 Bonn (DE)
(72) Erfinder: Mildner, Frank, 64331 Weiterstadt (DE); Messmer, Martin, 13127 Berlin (DE); Friese, Ingo, 12247 Berlin (DE)
(74) Vertreter: Kampfenkel, Klaus

(56) Entgegenhaltungen:
- US-A1- 2004 153 655
- US-A1- 2005 176 407
- US-A1- 2007 220 275

## Beschreibung

Die Erfindung betrifft ein Verfahren zum Schutz der Privatsphäre bei der Anmeldung eines Mobilfunknetzteilnehmers an Webdiensten sowie eines Telekommunikationssystems zur Durchführung eines solchen Verfahrens.

Ein übliches Verfahren, einen Zugang zu einem gesicherten Webdienst mittels eines Mobilfunkgeräts zu erhalten, besteht darin, dass der Nutzer zur Initiierung der Authentifizierung seine Identität über den Browser seines PCs gegenüber dem Webdienst bekannt gibt. Im Gegenzug erhält der Nutzer ein sogenanntes Einmalkennwort, auch One Time Passwort (OTP) genannt, über eine SMS-Nachricht an sein Mobilfunkgerät geliefert. Dieses OTP-Passwort gibt der Nutzer am Browser seines PCs ein, um einen Zugang zum Webdienst zu erhalten. Dieses bekannte Authentifizierungsverfahren schützt jedoch die Privatsphäre des Nutzers nicht. Zudem kann es zu Eingabefehlern führen, da der Nutzer nutzerspezifische Daten zur Durchführung der Authentifizierung an seinem PC eingeben muss.

Der Erfindung liegt die Aufgabe zu Grunde, ein Verfahren sowie ein Telekommunikationssystem zum Schutz der Privatsphäre bei der Anmeldung eines Nutzers an einem gesicherten Webdienst mittels eines Mobilfunkgerät zu Verfügung zu stellen, welches die Privatsphäre des Nutzers schützt, Bedienfehler weitgehend ausschließt und leicht handhabbar ist.

Ein Kerngedanke der Erfindung ist darin zu sehen, dass sich nicht der Nutzer am gewünschten Webdienst, auch Webservice genannt, sondern der gewünschte Webdienst und der an der Authentifizierung beteiligte Authentifizierungsdienst gegenüber dem Nutzer identifizieren müssen. Ein weiterer Gesichtspunkt der Erfindung kann darin gesehen werden, dass der Nutzer keine nutzerbasierten Daten an seinem Kommunikationsendgerät oder Mobilfunkgerät zur Authentifizierung eingeben muss. Auf diese Art und Weise können Bedienfehler ausgeschlossen werden. All dies wird dadurch erreicht, dass die zur Anmeldung des Nutzers am gesicherten Webdienst erforderliche Authentifizierung zwischen dem Mobilfunkgerät des Nutzers und einem Authentifizierungsdienst durchgeführt wird. Hierzu muss der Authentifizierungsprozess nach erfolgter Identifizierung des Webdienstes nur noch vom Nutzer durch einen entsprechenden Startbefehl eingeleitet werden.

Gemäß einem weiteren Aspekt werden zur Durchführung des Authentifizierungsprozesses die bekannten technischen Spezifikationen 3GPP TS 24.109, 3GPP TS 29.109 und 3GPP TS 33.223 berücksichtigt.

Dokument US 2007/220275 offenbart ein Verfahren zur Anmeldung eines Mobilfunknetzteilnehmers an Webdiensten.

Das oben genannte technische Problem wird zum einen durch die Verfahrensschritte des Anspruchs 1 gelöst.

Danach wird ein Verfahren zum Schutz der Privatsphäre bei der Anmeldung eines Nutzers an einem gesicherten Webdienst mittels eines an einem Mobilfunknetzbetreiber angemeldeten Mobilfunkgeräts, in welchem eine Authentifizierungs-Applikation installiert ist, definiert.

Zunächst fordert ein Nutzer einen gesicherten Webdienst im Browser eines ihm zugeordneten Kommunikationsendgeräts an. Bei dem Kommunikationsendgerät kann es sich um einen gewöhnlichen Personal-Computer, einen PDA oder auch ein Notebook handeln, welche jeweils einen Internet-Zugang besitzen. An dieser Stelle sei angemerkt, dass unter einem gesicherten Webdienst ein anmelde- oder authentifizierungspflichtiger Webdienst gemeint ist.

Einen gesicherten Webdienst kann ein Nutzer in herkömmlicher Weise anfordern, indem er beispielsweise im Browser seines Kommunikationsendgeräts die entsprechende Ressourcenbezeichnung, im Englischen auch Uniform Ressource Locator (URL) des gewünschten Webdienstes eingibt. Hierdurch wird eine Kommunikationsverbindung zwischen dem Browser des Kommunikationsendgeräts und einem Authentifizierungsdienst hergestellt.

Eine solche Kommunikationsverbindung kann automatisch hergestellt werden. Denkbar ist aber auch, dass der angeforderte Webdienst zum Beispiel ein Feld "User Login" im Browser des Kommunikationsendgeräts anzeigt, das die Option "Authentifizieren über Mobilfunkgerät" anbietet. Wählt der Nutzer diese Option, wird ein entsprechender Authentifizierungswunsch oder eine entsprechende Anmeldeanforderung zum Authentifizierungsdienst umgeleitet.

Der Authentifizierungsdienst kann in einem Authentifizierungssystem oder Authentifizierungsrechner des Mobilfunknetzbetreibers, an welchem das Mobilfunkgerät angemeldet ist, oder eines anderen Mobilfunknetzbetreibers installiert sein. Nunmehr werden die Adresse des Authentifizierungsdienstes und eine Sitzungsidentifikation, auch Session ID genannt, die die Kommunikationsverbindung des Nutzers zum gesicherten Webdienstes eindeutig identifiziert, vom Authentifizierungsdienst zum Browser des Kommunikationsendgeräts übertragen. Auf diese Weise identifizieren sich der Authentifizierungsdienst und der angeforderte Webdienst gegenüber dem Nutzer und nicht umgekehrt.

Angemerkt sei an dieser Stelle, dass es beliebige Möglichkeiten gibt, die Sitzungsidentifikation des angeforderten Webdienstes dem Authentifizierungsdienst mitzuteilen.

Vorteilhafter Weise können die Adresse des Authentifizierungsdienstes und die Sitzungsidentifikation des gesicherten Webdienstes in Form einer kodierten Information, insbesondere eines Barcodes, zum Browsers des Kommunikationsendgeräts übertragen werden.

Die im Browser empfangene Adresse der Authentifizierungseinrichtung und die empfangene Sitzungsidentifikation des gesicherten Webdienstes werden nun zum Mobilfunkgerät übertragen.

Im Fall der Barcode-Übertragung kann der Barcode mittels eines Codelesers oder einer Kamera des Mobilfunkgerätes vom Browser in das Mobilfunkgerät übernommen werden. Denkbar ist allerdings auch, dass beispielsweise die kodierten Informationen automatisch nach Erhalt oder durch Steuerung des Nutzers vom Browser zum Beispiel über eine Bluetooth-Schnittstelle zum Mobilfunkgerät übertragen werden.

Die Authentifizierungsapplikation des Mobilfunkgeräts wertet die Adresse des Authentifizierungsdienstes aus und überträgt eine Authentifizierungsmeldung, welche zumindest eine Authentifizierungsanfrage und eine Identifikationsnummer des über das Mobilfunkgerät angemeldeten Nutzers enthält, zum Authentifizierungsdienst.

Vorzugsweise kann auch noch die Sitzungsidentifikation des angeforderten Webdienstes ausgewertet werden. Die Authentifizierungsmeldung kann nach Autorisierung durch den Nutzer, zum Beispiel durch einfache Bestätigung oder auch durch Eingabe einer PIN am Mobilfunkgerät übertragen werden. Durch die Authentifizierungsanfrage wird der Authentifizierungsdienst aufgefordert, die Authentifizierungsprozedur zu starten. Die Authentifizierungsmeldung wird über das Mobilfunknetz des Mobilfunknetzbetreibers, an welchem das Mobilfunkgerät angemeldet ist, übertragen.

Unter Ansprechen auf die Authentifizierungsanfrage veranlasst der Authentifizierungsdienst die Durchführung einer sicheren Authentifizierung zwischen dem Mobilfunkgerät und dem Authentifizierungsdienst. Wenn die Authentifizierung erfolgreich war, erzeugt der Authentifizierungsdienst ein Kennwort und überträgt dieses Kennwort, vorzugsweise basierend auf wiederholenden asynchronen Anfragen des Browsers hin, an den Browser des Kommunikationsendgeräts. Es ist wichtig darauf hinzuweisen, dass das Kennwort keine nutzerspezifischen Daten enthält. Bei dem Kennwort kann es sich um ein Einmalkennwort, einen sogenannten One-Time-Token handeln.

Um sich am gesicherten Webdienst anzumelden, wird nun das Kennwort vom Browser zum gesicherten Webdienst übertragen wird.

Aufgrund einer Vertrauensbeziehung zwischen dem Webdienst und dem Authentifizierungsdienst kann der Webdienst nun das Kennwort beim Authentifizierungsdienst validieren.

Alternativ kann das Kennwort vom Authentifizierungsdienst auch an den sicheren Webdienst übertragen werden, wobei der Webdienst dann das vom Authentifizierungsdienst und das vom Browser des Kommunikationsendgeräts empfangene Kennwort auf Übereinstimmung hin prüft.

Bei der sicheren Authentifizierung des Mobilfunkgerätes beim Authentifizierungsdienst kann es sich zweckmäßiger Weise um ein Challenge-Response-Verfahren handeln.

Vorteilhafter Weise fordert der Authentifizierungsdienst die zur Durchführung des Challenge-Response-Verfahrens erforderlichen Authentifizierungsinformationen von dem Mobilfunknetzbetreiber, bei welchem das Mobilfunkgerät des Nutzers angemeldet ist, an.

Gemäß einer beispielhaften Ausführungsform wird die Authentifizierung zwischen Authentifizierungsdienst, dem Mobilfunkbetreiber und dem Mobilfunkgerät entsprechend der 3GPP TS 33.223 Spezifikation durchgeführt.

Gemäß einer zweckmäßigen Weiterbildung enthält die von der Authentifizierungs-Applikation des Mobilfunkgeräts erzeugte Authentifizierungsmeldung ferner die Adresse des Authentifizierungsdienstes und die Sitzungsidentifikation des ausgewählten Webdienstes.

Das oben genannte technische Problem wird ebenfalls durch die Merkmale des Anspruchs 9 gelöst.

Danach wird ein Telekommunikationssystem zum Schutz der Privatsphäre bei der Anmeldung eines Nutzers an einem gesicherten Webdienst mittels eines Mobilfunkgerätes bereitgestellt.

Das Telekommunikationssystem weist eine Plattform auf, die wenigstens einen sicheren Webdienst zur Verfügung stellt. Weiterhin ist ein dem Nutzer zugeordneter Kommunikationsendgerät vorgesehen, auf welchem ein Browser initialisiert ist. Mittels des Browsers kann der Nutzer einen gesicherten Webdienst anfordern. Das Telekommunikationssystem enthält ferner wenigstens ein bei einem Mobilfunknetzbetreiber angemeldetes Mobilfunkgerät, auf welchem eine Authentifizierungs-Applikation installiert ist. Weiterhin ist ein Authentifizierungsdienst vorgesehen, der über eine erste Kommunikationsschnittstelle mit dem Browser des Kommunikationsendgeräts und über eine zweite Kommunikationsschnittstelle mit der Authentifizierungs-Applikation des Mobilfunkgerätes kommuniziert. Der Authentifizierungsdienst ist zweckmäßiger Weise in einem. separaten Authentifizierungssystem des Mobilfunkbetreibers, bei welchem das Mobilfunkgerät angemeldet ist, oder eines anderen Mobilfunknetzbetreibers installiert. Der Authentifizierungsdienst ist dazu ausgebildet, die Adresse des Authentifizierungsdienstes und die Sitzungsidentifikation eines am Browser ausgewählten sicheren Webdienstes zum Browser zu übertragen. Das Telekommunikationssystem umfasst ferner eine Einrichtung zum Übertragen der Adresse des Authentifizierungsdienstes und der Sitzungsidentifikation des angeforderten Webdienstes zur Authentifizierungs-Applikation des Mobilfunkgerätes. Die Authentifizierungs-Applikation des Mobilfunkgerätes erzeugt unter Ansprechen auf die empfangene Adresse des Authentifizierungsdienstes eine Authentifizierungsmeldung, welche eine Authentifizierungsaufforderung und eine Identifikationsnummer des Mobilfunkgeräts enthält. Sie überträgt diese Authentifizierungsmeldung über ein Mobilfunknetz zum Authentifizierungsdienst. Um den Schutz der Privatsphäre bei der Anmeldung des Nutzers am sicheren Webdienst sicher zu stellen, sind der Authentifizierungsdienst und die Authentifizierungs-Applikation des Mobilfunkgeräts zur Durchführung einer sicheren Authentifizierung ausgebildet. Nach einer erfolgreichen Authentifizierung erzeugt der Authentifizierungsdienst ein Kennwort und überträgt dieses Kennwort über die erste Kommunikationsschnittstelle zum Browser des Kommunikationsendgeräts. Der Browser ist dazu ausgebildet, das Kennwort automatisch oder mit der Zustimmung des Nutzers zum Webdienst zu übertragen. Unter Ansprechen auf das empfangene Kennwort gibt der Webdienst den Zugang für den Nutzer frei. Der Nutzer kann sich auf diese Weise zum Beispiel anonym an dem sicheren Webdienst anmelden.

Vorteilhafter Weise sind der Authentifizierungsdienst und die Authentifizierungs-Applikation des Mobilfunkgeräts zur

Durchführung eines Challenge-Response-Verfahrens ausgebildet.

Gemäß einer vorteilhaften Weiterbildung kommuniziert der Authentifizierungsdienst über eine dritte Kommunikationsschnittstelle mit einer Authentifizierungseinrichtung des Mobilfunkbetreibers, bei welchem das Mobilfunkgerät angemeldet ist, um die für das Challenge-Response-Verfahren erforderliche Information zu erhalten.

Gemäß einer vorteilhaften Ausführungsform sind der Authentifizierungsdienst, die Authentifizierungs-Applikation des Mobilfunkgeräts und die Authentifizierungseinrichtung des Mobilfunknetzbetreibers zur Durchführung einer Authentifizierung entsprechend der 3GPP TS 33.223 Spezifikation ausgebildet sind. In diesem Fall ist in der Authentifizierungseinrichtung eine Bootstrapping Server Function (BSF) installiert.

Vorteilhafter Weise erfolgt die Validierung des Kennwortes, welches der Webdienst vom Kommunikationsendgerät empfängt, durch den Webdienst über eine vertauensvolle Kommunikationsschnittstelle des Authentifizierungsdienst.

Das Kennwort kann ein sogenannter One-Time-Token sein.

Bei der Identifikationsnummer des Nutzers des Mobilfunkgeräts kann es sich um eine IMSI- oder MSISDN-Nummer handeln. Das Akronym IMSI steht für International Mobil Subscriber Identity, während das Akronym MSISDN für Mobil Subscriber ISDN steht. Die Bedeutung und Funktion dieser Identifikationsnummern sind allgemein bekannt.

Der Authentifizierungsdienst und die Plattform können zu dem Mobilfunkbetreiber, an dem das Mobilfunkgerät-angemeldet ist, oder zu einem anderen Mobilfunkbetreiber gehören.

Die Erfindung wird nachfolgend anhand eines Ausführungsbeispiels in Verbindung mit den beiliegenden Zeichnungen näher erläutert. Es zeigen:
- Fig. 1: den prinzipiellen Aufbau eines Telekommunikationssystems, in welchem die Erfindung verwirklicht ist, und
- Fig. 2: den Kommunikationsablauf zum Schutz der Privatsphäre bei der Anmeldung eines Nutzers an einem gesicherten Webdienst mittels eines Mobilfunkgeräts.

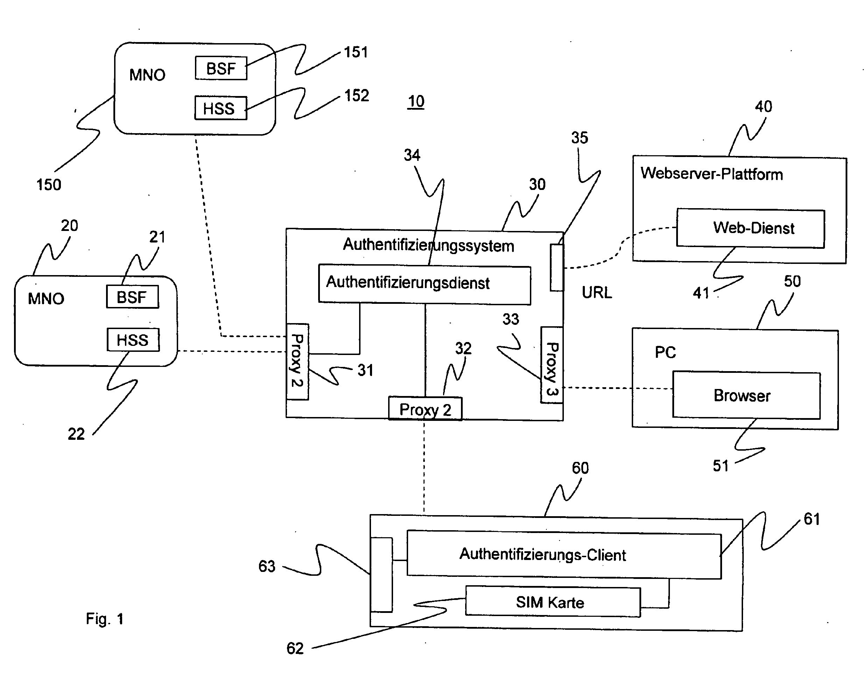

Figur 1 zeigt ein beispielhaftes Telekommunikationssystem 10, in welchem die Erfindung verwirklicht ist. Das Telekommunikationssystem 10 umfasst beispielsweise ein Authentifizierungssystem 30, in dem ein Authentifizierungsdienst 34 installiert ist. Der Authentifizierungsdienst 34 ist dazu ausgebildet, eine Authentifizierungsfunktion auszuführen, um einem Nutzer einen Schutz der Privatsphäre bei der Anmeldung an einem Webdienst zu ermöglichen. Das Authentifizierungssystem 30 weist eine erste Kommunikationsschnittstelle 33, auch Proxy genannt, auf, über die der Authentifizierungsdienst 34 mit einem Personalcomputer 50 eines Nutzers kommunizieren kann. Insbesondere ist in dem Personalcomputer ein Browser 51 installiert, der über die Kommunikationsschnittstelle 33 mit dem Authentifizierungsdienst 34 kommunizieren kann. Weiterhin ist eine Webserver-Plattform 40 vorgesehen, auf der wenigstens ein gesicherter Webdienst 41 realisiert ist. Jedem Webdienst ist eine Adresse, ein sogenannter Uniform-Ressource-Locator (URL) zugeordnet, mit dessen Hilfe der Nutzer im Browser 51 den dazugehörenden Webdienst anfordern kann. Der Authentifizierungsdienst 34 des Authentifizierungssystems 30 kann über die Kommunikationsschnittstelle 33 oder über eine weitere Kommunikationsschnittstelle 35 mit dem Webdienst 41 kommunizieren. Die Kommunikationsschnittstelle 33 kann als http- oder https-Schnittstelle ausgebildet sein. Die Kommunikation zwischen dem Authentifizierungssystem 30, dem Webdienst 41 und dem PC 50 erfolgt über entsprechende Internetverbindungen.

Das Telekommunikationssystem 10 enthält ferner wenigstens ein Mobilfunkgerät 60, welches dem Nutzer des Personalcomputers 50 gehört. Das Mobilfunkgerät 60, welches ein Mobilfunktelefon sein kann, weist in an sich bekannter Weise eine SIM-Karte 62 auf, welcher eine eindeutige Identifikation beispielsweise in Form einer IMSI-Nummer oder einer MSISDN-Nummer zugeordnet ist. In dem Mobilfunkgerät 60 ist weiterhin ein AuthentifizierungsClient 61, auch Authentifizierungs-Applikation genannt, installiert. Für die vorliegende Erfindung ist es unerheblich, ob die Authentifizierungs-Applikation 61 im Mobilfunkgerät 60 oder in der SIM-Karte 62 installiert ist. Weiterhin enthält das Mobilfunkgerät 60 einen Barcode-Leser und/oder eine Kamera 63. Das Authentifizierungssytem 30 verfügt über eine weitere Kommunikationsschnittstelle 32, über die der Authentifizierungsdienst 34 mit der Authentifizierungs-Applikation 61 des Mobilfunkgeräts 60 kommunizieren kann. Die Kommunikationsschnittstelle 32 kann als Kombination aus Ua- und Upa-Schnittstelle implementiert sein, welche in der technischen Spezifikation 3 GPP TS33.223 spezifiziert ist. Wie nachfolgend noch näher erläutert wird, kann die Authentifizierungs-Applikation 61 Push-Anforderungsmeldungen erzeugen, mit denen der Authentifizierungsdienst 34 aufgefordert werden kann, einen Authentifizierungsprozess zu starten.

Die Kommunikation zwischen dem Authentifizierungsdienst 34 und der Authentifizierungs-Applikation 61 des Mobilfunkgeräts 60 erfolgt über ein Mobilfunknetz an welchem der Nutzer über das Mobilfunkgerät 60 angemeldet ist. Angenommen sei, dass der Nutzer beim Mobilfunknetzbetreiber 20 angemeldet ist. Um eine Authentifizierung durchführen zu können, kann das Authentifizierungssystem 30 eine weitere Kommunikationsschnittstelle 31 aufweisen, über die der Authentifizierungsdienst 34 mit einer Authentifizierungseinrichtung 21 des Mobilfunknetzbetreibers 20 kommunizieren kann. Hierzu ist die Kommunikationsschnittstelle 31 vorzugsweise als Zpn-Schnittstelle implementiert, welche gemäß der technischen Spezifikation 3GPP TS29.109 standardisiert ist. In diesem Fall ist in der Authentifizierungseinrichtung 21 die Bootstrapping Server Function installiert und der Authentifizierungsdients 34 kann entsprechend den 3GPP GBA Push-Verfahren eine Challenge-Response-Information, auch GBA Push Information (GPI) genannt, von der Authentifizierungseinrichtung 21 anfordern.

Das Telekommunikationssystem 10 kann weitere Mobilfunknetze anderer Mobilfunkbetreiber umfassen. Der einfachen Darstellung wegen ist lediglich ein weiterer Mobilfunknetzbetreiber 150 dargestellt, der ebenfalls über eine Authentifizierungseinrichtung 151 mit einer Bootstrapping Server Function Funktionalität verfügt. Die Mobilfunkbetreiber 20 und 150 betreiben in an sich bekannter Weise ein Heimat-Teilnehmersystem 22 bzw. 152, auch Home-Subscriber-System genannt. Jedes Home-Subscriber-System verwaltet in an sich bekannter Weise alle Daten der jeweiligen angemeldeten Mobilfunkgeräte. Das Home-Subscriber-System 22 verwaltet unter anderem die Daten des Nutzers des Mobilfunkgerätes 60.

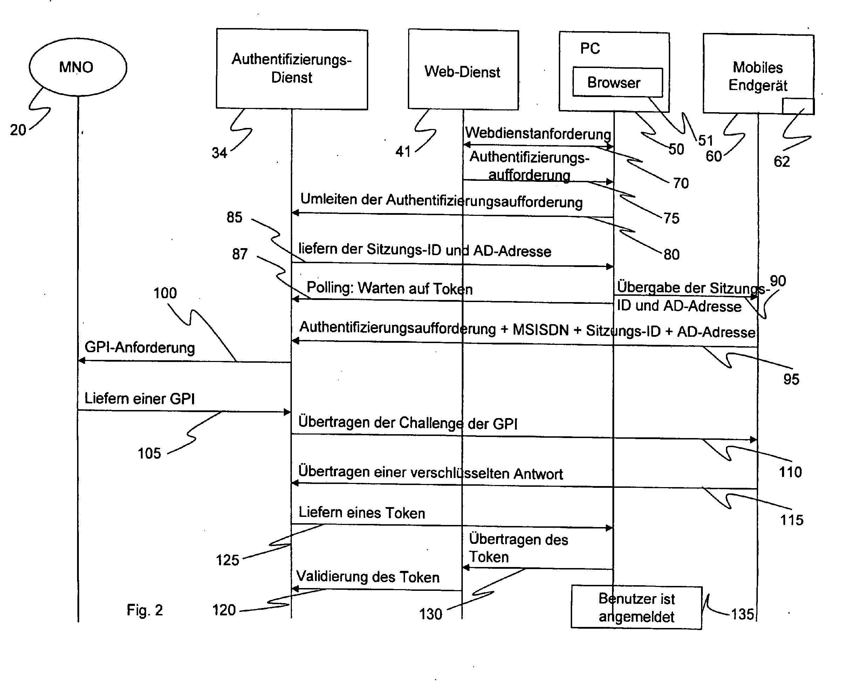

Die Funktionsweise des in Figur 1 gezeigten beispielhaften Telekommunikationssystems wird nun anhand eines Ausführungsbeispiels in Verbindung mit Fig. 2 näher erläutert.

Angenommen sei zunächst, dass das Authentifizierungssystem 30 und die Plattform 40 vom Mobilfunknetzbetreiber 150 betrieben werden. Der Nutzer bzw. das Mobilfunkgerät 60 sind Teilnehmer des Mobilfunknetzbetreibers 20.

Nunmehr möchte der Nutzer des Personalcomputers 50 einen Zugang zu dem gesicherten Webdienst 41 erhalten, ohne sich jedoch gegenüber dem Webdienst 41 identifizieren zu müssen.

Hierzu kann, wie in Fig. 2 gezeigt, der Nutzer im Browser 51 eine Webdienst-Anforderung 70 eingeben, die unter Anderem die URL des Web-Dienstes 41 enthält. Als Ergebnis kann eine Seite des Webdienstes mit einer Authentifizierungsaufforderung 75 im Browser 51 angezeigt werden, die ein Anmeldefeld mit der Option "Authentifizierung über Mobilfunkgerät" enthält. Wählt der Nutzer diese Authentifizierungsform im Browser 51 aus, wird der Browser 51 über die Kommunikationsschnittstelle 33 mit dem Authentifizierungsdienst 34 verbunden. Der Browser 51 überträgt nunmehr eine Authentifizierungsaufforderungs-Nachricht zum Authentifizierungsdienst 34. Mit anderen Worten wird der Browser 51 unter Ansprechen auf die ausgewählte Authentifizierungsform zum Authentifizierungsdienst 34 umgeleitet. Der Authentifizierungsdienst 34 verfügt über eine entsprechende Authentifizierungsfunktion, die unter Ansprechen auf die Authentifizierungsaufforderungs-Nachricht 80 eine Antwort-Nachricht 85 erzeugt, welche die Adresse des Authentifizierungsdienstes 34 und die Sitzungsidentifikation des Webdienstes 41 enthält. Die Nachricht 85 wird vorzugsweise in Form eines Barcodes vom Authentifizierungsdienst 34 zum Browser 51 übertragen.

Der Authentifizierungsdienst 34 kann die Sitzungsidentifikation des angeforderten Webdienstes 41 auf verschiedene Weisen erhalten. Denkbar ist, dass der Browser 51 mit der Nachricht 80 auch die URL des angeforderten Webdiensts 41 zum Authentifizierungsdienst 34 überträgt. Der Authentifizierungsdienst 34 fordert dann selbst die Sitzungsidentifikation vom Webdienst 41 an.

Um den Schutz der Privatsphäre bei der Anmeldung realisieren zu können, kann der Nutzer des Mobilfunknetzbetreibers 20 den empfangenen Barcode mittels des Barcodelesers 63 oder der Kamera 63 in das Mobilfunkgerät 60 übernehmen. Die Übergabe des Barcodes ist in Fig. 2 in Schritt 90 dargestellt. Die Authentifizierungs-Applikation 61 des Mobilfunkgeräts 60 ist in der Lage, die Sitzungsidentifikation und die Adresse des Authentifizierungsdienstes 34 aus dem Barcode zu gewinnen. Unter Ansprechen auf die im Barcode erhaltene Adresse des Authentifizierungsdienstes 34 erzeugt die Authentifizierungs-Applikation 61 eine Authentifizierungsanforderungsmeldung 95, welche beispielsweise die MSISDN-Nummer der SIM-Karte 62 des Mobilfunkgerätes 60, die Sitzungsidentifizierung des Webdienstes 41 und die Adresse des Authentifizierungsdienstes 34 enthält. Diese Authentifizierungsanforderungs-Meldung 95 überträgt die Authentifizierungs-Applikation 61 über das Mobilfunknetz des Mobilfunknetzbetreibers 20 zur Schnittstelle 32 des Authentifizierungssystems 30.

Unter Ansprechen auf die empfangene Authentifizierungsanforderungsmeldung 95 überträgt der Authentifizierungsdienst 34 eine Anforderungsmeldung 100 über die Schnittstelle 31 des Authentifizierungsrechners 30 zur Authentifizierungseinrichtung 21 des Mobilfunknetzbetreibers 20, an welchem das Mobilfunkgerät 60 angemeldet ist. Bei dem beschriebenen Beispiel enthält die Anforderungsmeldung 100 eine GPI-Anforderung an die Bootstrapping Server Function der Authentifizierungseinrichtung 21, eine GPI-Information zum Authentifizierungsdienst 34 zu übertragen. Bei der GPI-Information handelt es sich um eine GBA Push-Information (GPI) entsprechend der technischen Spezifizierung 3GPP TS 33.223. Die GPI-Information enthält, vereinfacht gesagt, nutzerbezogene Schlüssel, die Challenge und die zugehörige Response für das Challenge-Response-Verfahren, welches zwischen dem Authentifizierungsdienst 34 und der Authentifizierungs-Applikation 61 des Mobilfunkgerätes 60 durchgeführt werden soll. Die Authentifizierungseinrichtung 21 kann diese Informationen über das Home Subscriber System 22 des Mobilfunknetzbetreibers 20 anfordern. Anschließend überträgt die Authentifizierungseinrichtung 21 bzw. deren Bootstrapping Server Function die GPI-Information über die Kommunikationsschnittstelle 31 zum Authentifizierungsdienst 34. Der Authentifizierungsdienst 34 überträgt dann die in der GPI-Information enthaltene Challenge in einer Meldung 110 über die Kommunikationsschnittstelle 32 und das Mobilfunknetz des Mobilfunknetzbetreibers 20 zur Authentifizierungs-Applikation 61 des Mobilfunkgerätes 60. Ist die Authentifizierungs-Applikation 61 im Mobilfunkgerät 60 und nicht in der SIM-Karte 62 installiert, übergibt die Authentifizierungs-Applikation 61 die Challenge der SIM-Karte 62. Die SIM-Karte 62 überprüft in an sich bekannter Weise (z.B. über die USIM Application), ob es sich bei der empfangenen Challenge um eine korrekte Anfrage handelt. Auf diese Weise kann die SIM-Karte 62 die Identität des Mobilfunknetzbetreibers 20 überprüfen. Die SIM-Karte 62 generiert bei erfolgreicher Prüfung mit seinem Schlüssel die zur Challenge gehörende Response und überträgt diese beispielsweise in einer verschlüsselten Meldung 115 mittels des mobilen Endgeräts 60 zurück zum Authentifizierungsdienst 34. In dem Authentifizierungssystem 30 ist die GPI Antwort des MNO 20 gespeichert, mit welcher der Authenifizierungsdienst 34 die empfangene Response vergleicht. Kann der Authentifizierungsdienst 34 die Response erfolgreich vergleichen, so wird die Authentifizierung des Nutzers als erfolgreich bewertet. Unter Ansprechen auf die erfolgreiche Authentifizierung und, sofern vorteilhafter Weise implementiert, basierend auf wiederholenden asynchronen Anfragen 87 des Browsers überträgt der Authentifizierungsdienst 34 ein Kennwort, welches ein sicherer One-Time-Token sein kann, in einer Nachricht 125 über die Kommunikationsschnittstelle 33 zum Browser 51 des Personalcomputers 50 des Nutzers. Der Browser 51 überträgt dann das vom Authentifizierungsdienst 34 empfangene Kennwort in einer Nachricht 130 zum Webdienst 41. Der Webdienst 41 validiert das Kennwort in einer Meldung 120 beim Authentifizierungsdienst 34 als zulässige Anmeldung oder Authentifizierung des Nutzers gegenüber dem Webdienst 41.

Alternativ kann der Authentifizierungsdienst 34 den zum Browser 51 übertragenen One-Time-Token in einer Nachricht 120 über die Kommunikationsschnittstelle 33 oder die weitere Schnittstelle 35 auch zum Webdienst 41 übertragen. Der Webdienst 41 vergleicht dann den vom Authentifizierungsdienst 34 empfangenen One-Time-Token mit dem vom Browser 51 empfangenen One-Time-Token auf Übereinstimmung hin. Stimmen die beiden Token überein, gilt der Kunde als authentifiziert.

Auf diese Weise kann sich der Kunde des Mobilfunknetzbetreibers 20 sicher und mit Schutz der Privatsphäre bei dem Webdienst 41 anmelden.

Dieses Ziel wird insbesondere dadurch erreicht, dass das Mobilfunkgerät 60 einen Authentifizierungsclient 61 besitzt, der eine Authentifizierungsanforderungsmeldung 95 zum Authentifizierungsdienst 34 übertragen kann. Der Authentifizierungsdienst 34 enthält eine entsprechend ausgebildete Authentifizierungsfunktion, die die Authentifizierungsanforderungsmeldung von dem Authentifizierungsclient 61 des Mobilfunkgeräts empfangen kann. Darüber hinaus holt sich der Authentifizierungsdienst 34 unter Ansprechen auf die Authentifizierungsanforderungsnachricht automatisch die entsprechenden Challenge-Response-Informationen vom Mobilfunknetzbetreiber 20, zu dem der Nutzer des Mobilfunkgerätes 60 gehört, und führt anschließend eine Authenitifizierung mit dem Mobilfunkgerät durch, ohne das sich der Nutzer am Webdienst persönlich identifizieren muss.

Auf diese Weise ist eine einfache, sichere Authentifizierung für den Nutzer und der Schutz der Privatsphäre garantiert, da vom Nutzer keine manuelle Eingabe von Identifikationsinformationen verlangt wird und die Authentifizierung gegenüber dem Webdienst z.B. anonym abläuft.

## Patentansprüche

1. Verfahren zur zum Schutz der Privatsphäre bei der Anmeldung eines Nutzers an einem gesicherten Webdienst (41) mittels eines bei einem Mobilfunknetzbetreibers (20) angemeldeten Mobilfunkgeräts (60), in welchem eine Authentifizierungsapplikation (61) installiert ist, mit folgenden Schritten:
- Anfordern eines gesicherten Webdienstes (41) in einem Browser (51) eines Kommunikationsendgeräts (50) des Nutzers;
- Herstellen einer Kommunikationsverbindung zwischen dem Browser (51) des Kommunikationsendgeräts )50) und einem Authentifizierungsdienst (34);
- Übertragen der Adresse des Authentifizierungsdienstes (34) und der Sitzungsidentifikation des gesicherten Webdienstes (41) vom Authentifizierungsdienst (34) zum Browser (51) des Kommunikationsendgeräts (50);
- Übertragen der Adresse der Authentifizierungseinrichtung (34) und der Sitzungsidentifikation des gesicherten Webdienstes (41) an das Mobilfunkgerät (60);
- unter Ansprechen auf die Adresse des Authentifizierungsdienstes (34) Übertragen einer Authentifizierungsmeldung, welche eine Authentifizierungsanforderung und eine Identifikationsnummer des Mobilfunkgeräts (60) enthält, von der Authentifizierungsapplikation (61) des Mobilfunkgeräts (60) zum Authentifizierungsdienst (34);
- Durchführen einer sicheren Authentifizierung zwischen dem Authentifizierungsdienst (34) und dem Mobilfunkgerät (60);
- Erzeugen eines Kennworts durch den Authentifizierungsdienst (34), wenn die Authentifizierung erfolgreich war;
- Übertragen des Kennwortes zum Browser (51) des Kommunikationsendgeräts (50);
- Anmelden des Nutzers am gesicherten Webdienst (41), indem das Kennwort vom Browser (51) zum gesicherten Webdienst (41) übertragen wird.

2. Verfahren nach Anspruch 1,
**dadurch gekennzeichnet, dass**
als sichere Authentifizierung ein Challenge-Response-Verfahren durchgeführt wird.

3. Verfahren nach Anspruch 2,
**dadurch gekennzeichnet, dass**
der Authentifizierungsdienst (34) die zur Durchführung des Challenge-Response-Verfahrens erforderlichen Authentifizierungsinformationen vom Mobilnetzbetreiber (20), an welchem das Mobilfunkgerät (60) angemeldet ist, anfordert.

4. Verfahren nach Anspruch 2 oder 3,
**dadurch gekennzeichnet, dass**
die Authentifizierung entsprechend der 3GPP TS 33.223. Spezifikation durchgeführt wird.

5. Verfahren nach einem der vorstehenden Ansprüche,
**dadurch gekennzeichnet, dass**
das Kennwort vom Authentifizierungsdienst (34) auch an den sicheren Webdienst (41) übertragen wird, und dass der Webdienst (41) das vom Authentifizierungsdienst und das vom Browser (51) des Kommunikationsendgeräts (50) empfangene Kennwort auf Übereinstimmung hin prüft.

6. Verfahren nach einem der Ansprüche 1 bis 5,
**dadurch gekennzeichnet, dass**
der Webdienst (41) das Kennwort vom Browser (51) des Kommunikationsendgeräts (50) empfängt und beim Authentifizierungsdienst (34) validiert.

7. Verfahren nach einem der vorstehenden Ansprüche,
**dadurch gekennzeichnet, dass**
die Adresse des Authentifizierungsdienstes (34) und der Sitzungsidentifikation des gesicherten Webdienstes (41) in Form einer codierten Information, insbesondere eines Barcodes, zum Browser (51) des Kommunikationsendgeräts übertragen und mittels eines Codelesers (63) oder einer Kamera (63) des Mobilfunkgeräts (60) in das Mobilfunkgerät übertragen werden.

8. Verfahren nach einem der vorstehenden Ansprüche,
**dadurch gekennzeichnet, dass**
die von der Authentifizierungs-Applikation (61) erzeugte Authentifizierungsmeldung ferner die Adresse des Authentifizierungsdienstes und die Sitzungsidentifikation des ausgewählten Webdienstes (41) enthält.

9. Telekommunikationssystem (10) zum Schutz der Privatsphäre bei der Anmeldung eines Nutzers an einem gesicherten Webdienst (41) mittels eines
Mobilfunkgeräts (60), mit
einer wenigstens einen sicheren Webdienst (41) zur Verfügung stellenden Plattform (40),
einem dem Nutzer zugeordneten Kommunikationsendgerät (50), auf welchem ein Browser (51) installiert ist, einem bei einem Mobilfunknetzbetreiber (20) angemeldeten und dem Nutzer zugeordnetes Mobilfunkgerät (60), auf welchem eine Authentifizierungs-Applikation (61) installiert ist, .einem Authentifizierungsdienst (34), der über eine erste Kommunikationsschnittstelle (33) mit dem Browser (51) des Kommunikationsendgeräts (50) und über eine zweite Kommunikationsschnittstelle (33) mit der Authentifizierungs-Applikation des Mobilfunkgeräts (60) kommuniziert,
wobei der Authentifizierungsdienst (34) zum Übertragen der Adresse des Authentifizierungsdienstes (34) und der Sitzungsidentifikation eines am Browser (51) ausgewählten sicheren Webdiensts (41) zum Browser (51) ausgebildet ist, wobei eine Einrichtung (63) zum Übertragen der Adresse des Authentifizierungsdienstes (34) und der Sitzungsidentifikation des am Browser ausgewählten sicheren Webdienstes (41) zur Authentifizierungs-Applikation (61) des Mobilfunkgerätes (60) vorgesehen ist,
wobei die Authentifizierungs-Applikation (61) des Mobilfunkgeräts (60) unter Ansprechen auf die empfangene Adresse des Authentifizierungsdienstes (34) eine Authentifizierungsmeldung, welche eine Authentifizierungsaufforderung und eine Identifikationsnummer des Mobilfunkgeräts (60)
enthält, erzeugt und über ein Mobilfunknetz zum Authentifizierungsdienst (34) überträgt,
wobei der Authentifizierungsdienst (34) und die Authentifizierungs-Applikation (61) des Mobilfunkgeräts (60) zur Durchführung einer sicheren Authentifizierung ausgebildet sind, wobei der Authentifizierungsdienst (34) nach einer erfolgreichen Authentifizierung ein Kennwort erzeugt und dieses über die erste Kommunikationsschnittstelle (33) zum Browser (51) des Kommunikationsendgeräts (50), wobei der Browser (51) zur Übertragung des Kennworts zum Webdienst (41) ausgebildet ist, und wobei der Webdienst (41) unter Ansprechen auf das empfangene Kennwort den Zugang für den Nutzer freigibt.

10. Telekommunikationssystem nach Anspruch 9,
**dadurch gekennzeichnet, dass**
der Authentifizierungsdienst (34) und die Authentifizierungs-Applikation (61) des Mobilfunkgeräts (60) zur Durchführung eines Challenge-Response-Verfahrens ausgebildet sind.

11. Telekommunikationssystem nach Anspruch 10,
**dadurch gekennzeichnet, dass**
der Authentifizierungsdienst (34) über eine dritte Kommunikationsschnittstelle (31) mit einer Authentifizierungseinrichtung (21) des Mobilfunkbetreibers (20), bei welchem das Mobilfunkgerät (60) angemeldet ist, kommuniziert, um die für das Challenge-Response-Verfahrens erforderliche Information zu erhalten.

12. Telekommunikationssystem nach einem der Ansprüche 9 bis 11,
**dadurch gekennzeichnet, dass**
der Authentifizierungsdienst (34) das Kennwort über die zweite Kommunikationsschnittstelle (33) auch zum Webdienst (41) überträgt.

13. Telekommunikationssystem nach einem der Ansprüche 9 bis 12,
**dadurch gekennzeichnet, dass**
das Kennwort ein Einmalkennwort (One-Time-Token) ist.

14. Telekommunikationssystem nach einem der Ansprüche 9 bis 13,
**dadurch gekennzeichnet, dass**
die Identifikationsnummer des Mobilfunkgeräts (60) eine IMSI- (International Mobile Subscriber Identity)- oder MSISDN-Nummer (Mobile Subscriber ISDN) ist.

15. Telekommunikationssystem nach einem der Ansprüche 9 bis 14,
**dadurch gekennzeichnet, dass**
der Authentifizierungsdienst (34), die Authentifizierungs-Applikation (61) des Mobilfunkgeräts (60) und die Authentifizierungseinrichtung (21) des Mobilfunknetzbetreibers (20) zur Durchführung einer Authentifizierung entsprechend der 3GPP TS 33.223 Spezifikation ausgebildet sind.

16. Telekommunikationssystem nach einem der Ansprüche 9 bis 15,
**dadurch gekennzeichnet, dass**
der Authentifizierungsdienst (34) und die Plattform (40) zu dem Mobilfunkbetreiber (20), an dem das Mobilfunkgerät (60) angemeldet ist, oder zu einem anderen Mobilfunkbetreiber (150) gehören.

## Claims

1. A method for protecting privacy when a user logs into a secure web service (41) using a mobile device (60) that is subscribed to a mobile network operator (20) and in which an authentication application (61) is installed, comprising the steps of:
- requesting a secure web service (41) in a browser (51) of a communication terminal (50) of the user;
- establishing a communication connection between the browser (51) of the communication terminal (50) and an authentication service (34);
- transmitting the address of the authentication service (34) and the session identification of the secure web service (41) from the authentication service (34) to the browser (51) of the communication terminal (50);
- transmitting the address of the authentication service (34) and the session identification of the secure web service (41) to the mobile device (60);
- in response to the address of the authentication service (34), transmitting an authentication message that includes an authentication request and an identification number of the mobile device (60), from the authentication application (61) of the mobile device (60) to the authentication service (34);
- performing secure authentication between the authentication service (34) and the mobile device (60);
- generating a password by the authentication service (34), if the authentication was successful;
- transmitting the password to the browser (51) of the communication terminal (50);
- logging the user into the secure web service (41) by transmitting the password from the browser (51) to the secure web service (41).

2. The method as claimed in claim 1, **characterized in that** a challenge-response procedure is performed as said secure authentication.

3. The method as claimed in claim 2, **characterized in that** the authentication service (34) requests the authentication information required for performing the challenge-response procedure from the mobile network operator (20) to which the mobile device (60) is subscribed.

4. The method as claimed in claim 2 or 3, **characterized in that** said authentication is performed according to the 3GPP TS 33.223 specification.

5. The method as claimed in any of the preceding claims, **characterized in that** the password is transmitted by the authentication service (34) also to the secure web service (41), and that the web service (41) checks the passwords as received from the authentication service and from the browser (51) of the communication terminal (50) for match.

6. The method as claimed in any of claims 1 to 5, **characterized in that** the web service (41) receives the password from the browser (51) of the communication terminal (50) and validates it with the authentication service (34).

7. The method as claimed in any of the preceding claims, **characterized in that** the address of the authentication service (34) and the session identification of the secure web service (41) are transmitted to the browser (51) of the communication terminal in form of encoded information, in particular as a bar code, and are transferred into the mobile device using a code reader (63) or a camera (63) of the mobile device (60).

8. The method as claimed in any of the preceding claims, **characterized in that** the authentication message generated by the authentication application (61) further comprises the address of the authentication service and the session identification of the selected web service (41).

9. A telecommunications system (10) for protecting privacy when a user logs into a secure web service (41) using a mobile device (60), comprising
a platform (40) which provides at least one secure web service (41) ;
a communication terminal (50) associated with the user, in which a browser (51) is installed;
a mobile device (60) subscribed to a mobile network operator (20) and associated with the user, in which an authentication application (61) is installed;
an authentication service (34) communicating with the browser (51) of the communication terminal (50) via a first communication interface (33) and with the authentication application of the mobile device (60) via a second communication interface (32);
wherein the authentication service (34) is adapted for transmitting the address of the authentication service (34) and the session identification of a secure web service (41) selected at the browser (51) to the browser (51), a means (63) being provided for transmitting the address of the authentication service (34) and the session identification of the secure web service (41) selected at the browser (51) to the authentication application (61) of the mobile device (60);
wherein the authentication application (61) of the mobile device (60), in response to the received address of the authentication service (34), generates an authentication message including an authentication request and an identification number of the mobile device (60) and transmits it to the authentication service (34) via a mobile network;
wherein the authentication service (34) and the authentication application (61) of the mobile device (60) are adapted to perform a secure authentication;
wherein, following a successful authentication, the authentication service (34) generates a password and transmits it to the browser (51) of the communication terminal (50) via the first communication interface (33);
wherein the browser (51) is adapted to transmit the password to the web service (41), and wherein the web service (41), in response to the received password, grants access for the user.

10. The telecommunications system as claimed in claim 9, **characterized in that** the authentication service (34) and the authentication application (61) of the mobile device (60) are adapted for performing a challenge-response procedure.

11. The telecommunications system as claimed in claim 10, **characterized in that** the authentication service (34) communicates with an authentication device (21) of the mobile network operator (20) to which the mobile device (60) is subscribed via a third communication interface (31), in order to obtain the information required for the challenge-response procedure.

12. The telecommunications system as claimed in any of claims 9 to 11, **characterized in that** the authentication service (34) transmits the password also to the web service (41), via the second communication interface (33).

13. The telecommunications system as claimed in any of claims 9 to 12, **characterized in that** the password is a single-use password (one-time token).

14. The telecommunications system as claimed in any of claims 9 to 13, **characterized in that** the identification number of the mobile device (60) is an IMSI (International Mobile Subscriber Identity) number or an MSISDN (Mobile Subscriber ISDN) number.

15. The telecommunications system as claimed in any of claims 9 to 14, **characterized in that** the authentication service (34), the authentication application (61) of the mobile device (60), and the authentication device (21) of the mobile network operator (20) are adapted to perform an authentication in accordance with the 3GPP TS 33.223 specification.

16. The telecommunications system as claimed in any of claims 9 to 15, **characterized in that** the authentication service (34) and the platform (40) belong to the mobile network operator (20) to which the mobile device (60) is subscribed, or belong to another mobile network operator (150).

## Revendications

1. Procédé de protection de la sphère privée lors de l'enregistrement d'un utilisateur sur un service web sécurisé (41) au moyen d'une station mobile (60) enregistrée auprès d'un opérateur de réseau de téléphonie mobile (20) et où est installée une application d'authentification (61), comprenant les étapes suivantes :
- appel d'un service web sécurisé (41) dans un navigateur (51) d'un terminal de communication (50) de l'utilisateur ;
- établissement d'une liaison de communication entre le navigateur (51) du terminal de communication (50) et un service d'authentification (34) ;
- transmission de l'adresse du service d'authentification (34) et de l'identification de session du service web sécurisé (41), du service d'authentification (34) au navigateur (51) du terminal de communication (50) ;
- transmission à la station mobile (60) de l'adresse de l'instance d'authentification (34) et de l'identification de session du service web sécurisé (41) ;
- en réaction à l'adresse du service d'authentification (34), transmission d'un message d'authentification contenant une demande d'authentification et un numéro d'identification de la station mobile (60), de l'application d'authentification (61) de la station mobile (60) au service d'authentification (34) ;
- exécution d'une authentification sécurisée entre le service d'authentification (34) et la station mobile (60) ;
- génération d'un mot de passe par le service d'authentification (34), si l'authentification a été fructueuse ;
- transmission du mot de passe au navigateur (51) du terminal de communication (50) ;
- enregistrement de l'utilisateur au service web sécurisé (41) par transmission du mot de passe du navigateur (51) au service web sécurisé (41).

2. Procédé selon la revendication 1, **caractérisé en ce qu'**un procédé défi-réponse est exécuté en tant qu'authentification sécurisée.

3. Procédé selon la revendication 2, **caractérisé en ce que** le service d'authentification (34) demande à l'opérateur du réseau de téléphonie mobile (20) auprès duquel la station mobile (60) est enregistrée les informations d'authentification exigées pour l'exécution du procédé défi-réponse.

4. Procédé selon la revendication 2 ou 3, **caractérisé en ce que** l'authentification est effectuée conformément à la spécification 3GPP TS 33.223.

5. Procédé selon l'une des revendications précédentes, **caractérisé en ce que** le mot de passe est également transmis du service d'authentification (34) au service web sécurisé (41), et **en ce que** le service web (41) contrôle la concordance du mot de passe reçu du service d'authentification avec celui reçu du navigateur (51) du terminal de communication (50).

6. Procédé selon l'une des revendications 1 à 5, **caractérisé en ce que** le service web (41) reçoit le mot de passe du navigateur (51) du terminal de communication (50) et le valide auprès du service d'authentification (34).

7. Procédé selon l'une des revendications précédentes, **caractérisé en ce que** l'adresse du service d'authentification (34) et l'identification de session du service web sécurisé (41) sont transmises sous forme d'une information codée, en particulier d'un code à barres, au navigateur (51) du terminal de communication et à la station mobile au moyen d'un lecteur de code (63) ou d'une caméra (63) de la station mobile (60).

8. Procédé selon l'une des revendications précédentes, **caractérisé en ce que** le message d'authentification généré par l'application d'authentification (61) contient en outre l'adresse du service d'authentification et l'identification de session du service web (41) sélectionné.

9. Système de télécommunication (10) pour la protection de la sphère privée lors de l'enregistrement d'un utilisateur sur un service web sécurisé (41) au moyen d'une station mobile (60), avec
une plate-forme (40) permettant d'accéder à au moins un service web sécurisé (41),
un terminal de communication (50) affecté à l'utilisateur, sur lequel est installé un navigateur (51),
une station mobile (60) enregistrée auprès d'un opérateur de réseau de téléphonie mobile (20) et affectée à l'utilisateur, sur laquelle est installée une application d'authentification (61),
un service d'authentification (34), communiquant avec le navigateur (51) du terminal de communication (50) par une première interface de communication (33), et avec l'application d'authentification de la station mobile (60) par une deuxième interface de communication (33),
le service d'authentification (34) étant configuré pour la transmission au navigateur (51) de l'adresse du service d'authentification (34) et de l'identification de session d'un service web sécurisé (41) sélectionné sur le navigateur (51), un dispositif (63) étant prévu pour la transmission de l'adresse du service d'authentification (34) et de l'identification de session du service web sécurisé (41) sélectionné sur le navigateur pour l'application d'authentification (61) de la station mobile (60),
l'application d'authentification (61) de la station mobile (60) générant un message d'authentification contenant une demande d'authentification et un numéro d'identification de la station mobile (60) en réaction à l'adresse reçue du service d'authentification (34), qu'il transmet au service d'authentification (34) via un réseau de téléphonie mobile, le service d'authentification (34) et l'application d'authentification (61) de la station mobile (60) étant configurés pour l'exécution d'une authentification sécurisée, le service d'authentification (34) générant un mot de passe après une authentification fructueuse et transmettant celui-ci au navigateur (51) du terminal de communication (50) par la première interface de communication (33), le navigateur (51) étant configuré pour la transmission du mot de passe au service web (41), et le service web (41) libérant l'accès pour l'utilisateur en réaction au mot de passe reçu.

10. Système de télécommunication selon la revendication 9, **caractérisé en ce que** le service d'authentification (34) et l'application d'authentification (61) de la station mobile (60) sont configurés pour l'exécution d'un procédé défi-réponse.

11. Système de télécommunication selon la revendication 10, **caractérisé en ce que** le service d'authentification (34) communique par une troisième interface de communication (31) avec une instance d'authentification (21) de l'opérateur de réseau de téléphonie mobile (20) auprès de qui la station mobile (60) est enregistrée, pour obtenir l'information exigée pour le procédé défi-réponse.

12. Système de télécommunication selon l'une des revendications 9 à 11, **caractérisé en ce que** le service d'authentification (34) transmet également le mot de passe au service web (41) par la deuxième interface de communication (33).

13. Système de télécommunication selon l'une des revendications 9 à 12, **caractérisé en ce que** le mot de passe est un mot de passe à usage unique (One-Time-Token).

14. Système de télécommunication selon l'une des revendications 9 à 13, **caractérisé en ce que** le numéro d'identification de la station mobile (60) est un numéro IMSI (International Mobile Subscriber Identity) ou MSISDN (Mobile Subscriber ISDN).

15. Système de télécommunication selon l'une des revendications 9 à 14, **caractérisé en ce que** le service d'authentification (34), l'application d'authentification (61) de la station mobile (60) et l'instance d'authentification (21) de l'opérateur de réseau de téléphonie mobile (20) sont configurés pour l'exécution d'une authentification en conformité avec la spécification 3GPP TS 33.223.

16. Système de télécommunication selon l'une des revendications 9 à 15, **caractérisé en ce que** le service d'authentification (34) et la plate-forme (40) appartiennent à l'opérateur de réseau de téléphonie mobile (20) auprès de qui la station mobile (60) est enregistrée, ou à un autre opérateur de réseau de téléphonie mobile (150).
